# EUROPEAN PATENT SPECIFICATION

(11) **EP 3 594 471 B1**
(45) Date of publication and mention of the grant of the patent: **10.05.2023**
(21) Application number: 18763803.6
(22) Date of filing: 27.02.2018
(51) Int. Cl.: F02B 31/06, F02B 31/04, F02D 9/10, F02M 35/10, F02M 35/108, F02M 69/32, F02M 3/14, F02M 3/12, F02B 31/08

(54) **AIR INTAKE STRUCTURE FOR INTERNAL COMBUSTION ENGINE**
LUFTANSAUGSTRUKTUR FÜR VERBRENNUNGSMOTOR
STRUCTURE D'ADMISSION D'AIR DESTINÉE À UN MOTEUR À COMBUSTION INTERNE

(30) Priority: 10.03.2017 JP 2017045638
(43) Date of publication of application: 15.01.2020
(73) Proprietor: Honda Motor Co., Ltd., Tokyo 107-8556 (JP)
(72) Inventor: NAKAMURA, Yohei, Wako-shi, Saitama 351-0193 (JP); SHOMURA, Takaaki, Wako-shi, Saitama 351-0193 (JP); CHO, Masaki, Wako-shi, Saitama 351-0193 (JP)
(74) Representative: Weickmann & Weickmann PartmbB
(86) International application number: PCT/JP2018/007227
(87) International publication number: WO 2018/163912

(56) References cited:
- WO-A1-2010/081595
- WO-A2-2007/029104
- DE-A1- 19 517 000
- JP-A- S54 106 719
- JP-A- S61 160 539
- JP-A- 2002 070 587
- JP-A- 2002 070 587
- JP-A- 2006 329 016
- JP-A- 2007 068 378
- JP-A- 2016 061 279
- US-A- 4 261 304
- US-A- 4 323 041
- US-A1- 2010 162 995
- US-A1- 2015 240 761

## Description

### [Technical Field]

The present invention relates to an intake structure for internal combustion engines which includes an idling air passageway, a throttle valve, and a tumble valve.

### [Background Art]

Patent document 1, for example, referred to hereinafter discloses an intake structure for internal combustion engines that has a throttle valve and a tumble control valve (TCV) disposed downstream of the throttle valve, and an intake passageway disposed downstream of the tumble control valve (hereinafter referred to simply as "tumble valve") and including a main passageway defined in its lower side and an auxiliary passageway defined in its upper side for producing a tumbling flow, in which the tumble valve limits the rate of intake air into the main passageway thereby to produce a tumbling flow.

Patent document 2, for example, referred to hereinafter discloses a structure having an intake passageway in a throttle body that includes a main passageway defined in its lower side and an auxiliary passageway defined in its upper side for producing a tumbling flow, and an idling air passageway defined in an upper side of the auxiliary passageway, in which while the internal combustion engine is idling with a throttle valve fully closed or is operating under a low load, idling air controlled by an idling air control valve (IACV) disposed in the idling air passageway flows from the idling air passageway into the auxiliary passageway and is supplied to a combustion chamber. According to Patent document 2, intake air flowing through the auxiliary passageway flows at a high speed along an intake port in a direction deflected to one side in the combustion chamber, producing a tumbling flow.

However, in a case where the intake passageway downstream of the tumble valve is divided into upper and lower regions by a partition plate in the intake structure for internal combustion engines that has the throttle valve and the tumble valve, since a fuel injection valve is generally disposed in an upper side of the intake passageway, it is preferable that the upper region provide a main passageway having a larger channel cross section and the lower region provide an auxiliary passageway for producing a tumbling flow in order to keep the fuel injection valve and the partition plate spaced apart by a distance for avoiding interference between injected fuel and the partition plate.

If the auxiliary passageway is defined in the lower side of the intake passageway and the idling air passageway with the idling air control valve disposed therein is disposed in the side of the auxiliary passageway, the idling air passageway is disposed in the lower side of the auxiliary passageway. Then, fuel whose specific gravity is larger than air tends to accumulate as a gas in the idling air passageway disposed in the lower side of the auxiliary passageway.

### [Prior Art Document]

### [Patent Documents]

Patent Document 1: JP 5925878 B (FIGS. 2, 6 through 8)
Patent Document 2: JP 2002-221036 A (FIGS. 2 through 4)

Document US 4,323, 041, comprises an intake structure for an internal combustion engine in which the internal combustion engine having a combustion chamber includes a cylinder block and a cylinder head, the cylinder head having an intake port and an exhaust port defined therein, wherein an inlet pipe is connected to the intake port, defining a continuous intake passageway, whrein the intake passageway is divided by a partition plate into an upper main passageway and a lower auxiliary passageway, wherein the intake structure furthermore comprises a throttle valve and a tumble valve, wherein the tumble valve is arranged downstream of an inlet of the lower auxiliary passageway.

Furthermore, documents US 4 261 304, DE 195 17 000 A1 and US 2015/240761 A1 shall be mentioned at this point.

### [Summary of the Invention]

### [Underlying Problem to be solved by the Invention]

The present invention has been made in view of the above conventional art. It is a task of the present invention to provide an intake structure for internal combustion engines that has a throttle valve and a tumble valve disposed downstream of the throttle valve, and an intake passageway disposed downstream of the tumble valve and including a main passageway defined in its upper side and an auxiliary passageway that serves as a tumbling flow channel defined in its lower side, in which a tumbling flow can easily be intensified even when the internal combustion engine is operating in an idling mode, etc.

### [Means to solve the Problem]

In order to accomplish the task, there is provided in accordance with the present invention an intake structure for an internal combustion engine according to claim 1.

With the above arrangement, at the time the internal combustion engine is operating in an idling mode, idling air flowing from the idling air passageway defined in the upper side of the intake channel in the throttle body into the intake channel is restrained by the tumble valve plate of the tumble valve from flowing into the upper main passageway in the intake passageway and is guided from the recess in the tumble valve plate to the lower auxiliary passageway as the tumbling flow channel. It is thus easy to produce a tumbling flow and intensify the tumbling flow. Inasmuch as the idling air passageway is defined in the upper side of the intake channel, fuel is less likely to accumulate as a gas in the idling air passageway. The idling air passageway is thus disposed above the intake channel. When the intake valve is closed in the combustion chamber, the fuel and intake air are stirred and uniformized in the intake port.

The idling air passageway may have a downstream passageway leading to the downstream outlet, the downstream passageway being defined parallel to the tumble valve plate of the tumble valve when the tumble valve is closed as viewed in a horizontal direction perpendicular to the flow direction in the intake channel.

With this arrangement, the downstream passageway defined in the vicinity of the downstream outlet of the idling air passageway is defined parallel to the tumble valve plate and a slant angle of the tumble valve when it is closed as viewed along the horizontal direction perpendicular to the flow direction in the intake channel. Therefore, idling air flowing out of the idling air passageway is more effectively restrained from flowing into the upper main passageway by the tumble valve plate and is guided toward a lower plate of the tumble valve plate to easily flow through the recess defined in the lower plate into the lower auxiliary passageway.

A tapered inner surface that is progressively larger in diameter toward a downstream side may be provided in the intake channel downstream of the throttle valve, the downstream outlet of the idling air passageway being defined in the tapered inner surface.

With this arrangement, because the downstream outlet of the idling air passageway is defined in the tapered inner surface, in the intake channel, which is progressively larger in diameter toward the downstream side, the downstream passageway of the idling air passageway can easily be formed parallel to the tumble valve plate of the tumble valve when it is closed as viewed along the horizontal direction perpendicular to the flow direction in the intake channel.

The downstream outlet of the idling air passageway may be disposed in a position that is closer to a throttle valve shaft of the throttle valve than to a tumble valve shaft of the tumble valve.

With this arrangement, since the downstream outlet of the idling air passageway is disposed in the position that is closer to the throttle valve shaft than to the tumble valve shaft. Accordingly, the distance between the downstream outlet of the idling air passageway and the recess in the lower plate of the tumble valve is increased to make it easy for the idling air flowing out of the idling air passageway to flow from the recess in the lower plate of the tumble valve into the lower auxiliary passageway.

### [Advantageous Effects of the Invention]

With the intake structure for internal combustion engines according to the present invention, at the time the internal combustion engine is operating in an idling mode, idling air flowing from the idling air passageway defined in the upper side of the intake channel in the throttle body into the intake channel is restrained by the tumble valve plate of the tumble valve from flowing into the upper main passageway in the intake passageway and is guided from the recess in the tumble valve plate to the lower auxiliary passageway as the tumbling flow channel. It is thus easy to produce a tumbling flow and intensify the tumbling flow. Inasmuch as the idling air passageway is defined in the upper side of the intake channel, fuel is less likely to accumulate as a gas in the idling air passageway, the idling air passageway may be thus disposed above the intake channel. When the intake valve is closed in the combustion chamber, the fuel and intake air are stirred and uniformized in the intake port.

### [Brief Description of Drawings]

FIG. 1 is a right-hand side elevational view of a motorcycle including a power unit having an intake structure for an internal combustion engine according to Embodiment 1 of the present invention.
FIG. 2 is a right-hand side elevational view of a rear portion of the motorcycle illustrated in FIG. 1 with a vehicle body cover removed therefrom.
FIG. 3 is a sectional side elevational view of the power unit that is oriented in the same way as with FIG. 2.
FIG. 4 is an enlarged view of a major section of FIG. 3.
FIG. 5 a right-hand side elevational view of a throttle body solely extracted from FIG. 4.
FIG. 6 is a front elevational view of a tumble valve as viewed along the arrow b in FIG. 5.
FIG. 7 is a right-hand side elevational view, partly in cross section, of a vehicle-mounted power unit having an intake structure for an internal combustion engine according to Embodiment 2 of the present invention. [Mode for carrying out the Invention]

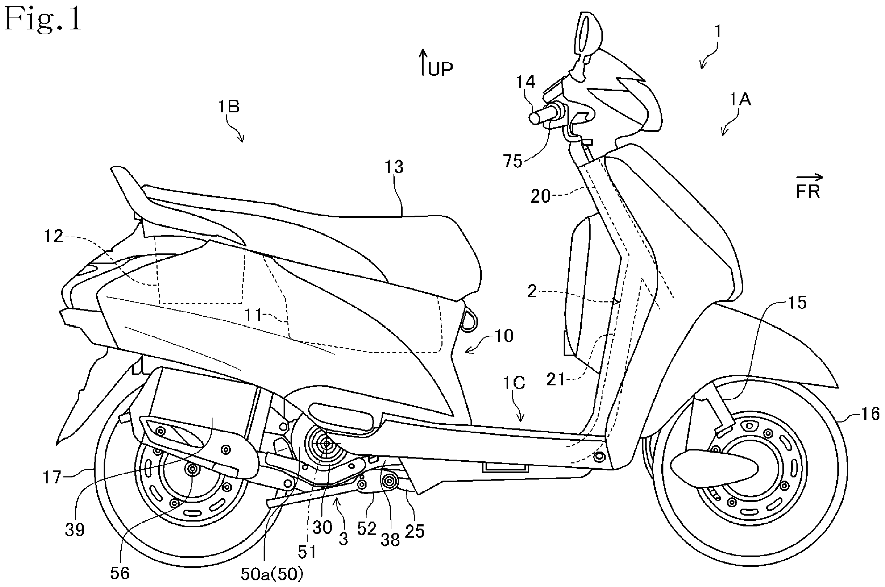

An intake structure for internal combustion engines according to Embodiment 1 of the present invention will hereinafter be described with reference to FIGS. 1 through 6.

In the description that follows and the scope of claims, forward, rearward, leftward, rightward, upward, and downward directions and other similar directional expressions will be in accord with directions of a vehicle that incorporates a power unit having an intake structure for internal combustion engines according to the present embodiment. According to the present embodiment, the vehicle is a small-size vehicle or, specifically, a motorcycle.

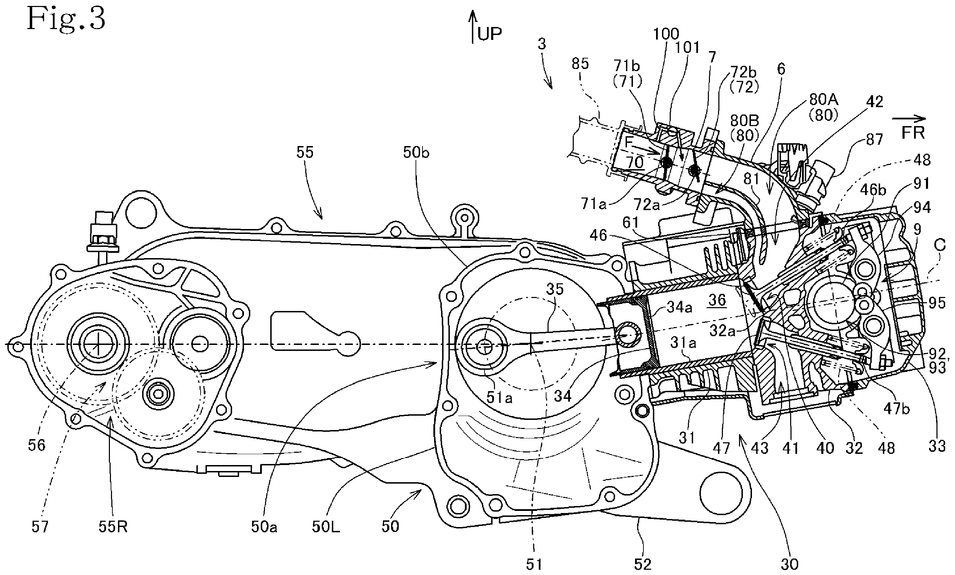

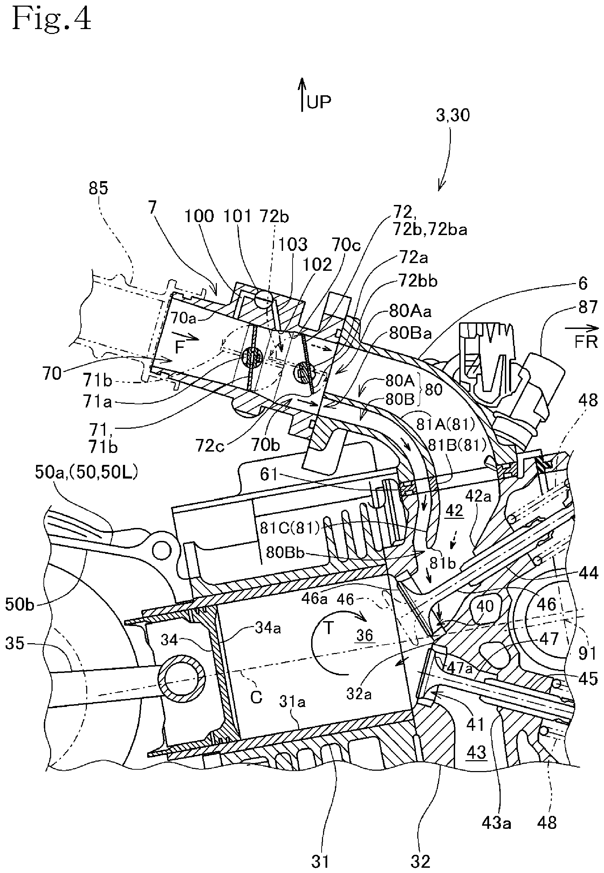

Regarding an intake channel 70 in a throttle body 7 and an intake passageway 80 illustrated in FIGS. 3 and 4, an upper main passageway 80A and a lower auxiliary passageway 80B that are separated by a partition plate 81 will be described respectively as "upper" and "lower" sides.

In the drawings, the arrow FR represents a forward direction of the vehicle, LH a leftward direction of the vehicle, RH a rightward direction of the vehicle, and UP an upward direction of the vehicle.

FIG. 1 illustrates a right-hand side of a motorcycle 1 including a power unit 3 having an intake structure for internal combustion engines according to Embodiment 1 of the present invention.

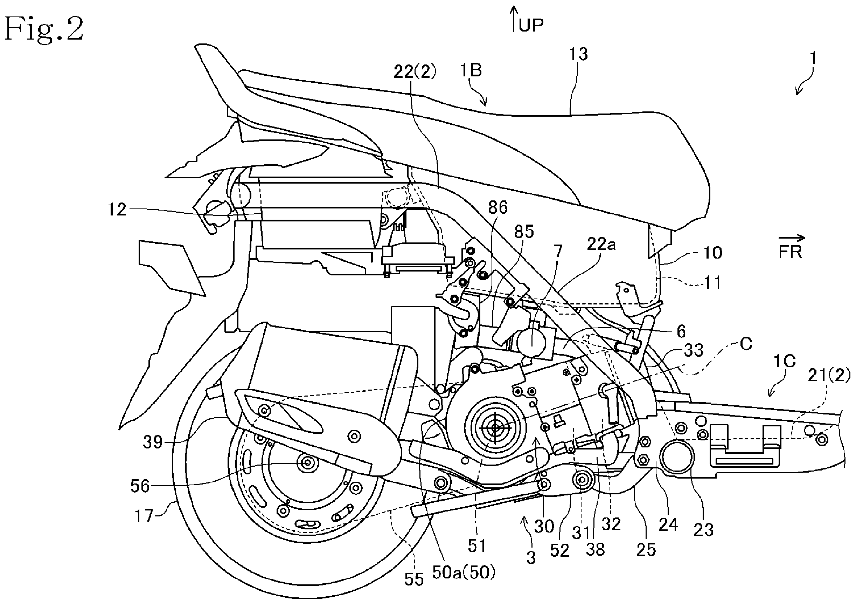

The motorcycle 1 according to the present embodiment is a scooter-type motorcycle having a front vehicle body portion 1A and a rear vehicle body portion 1B that are interconnected by a low floor portion 1C. A vehicle body frame 2 that provides a vehicle body skeleton generally includes a downtube 21 and a main pipe 22 (see FIG. 2).

Specifically, the downtube 21 extends downwardly from a head pipe 20 of the front vehicle body portion 1A. The downtube 21 is bent horizontally at its lower end and extends rearwardly below the floor portion 1C. As illustrated in FIG. 2, the downtube 21 has a rear end coupled to a pair of left and right main pipes 22 by a joint frame 23 disposed transversely across the vehicle. The main pipes 22 includes slanted portions 22a that rise obliquely upwardly from the joint frame 23 and are bent progressively less obliquely and extend rearwardly.

A storage box 11 and a fuel tank 12 are supported upwardly by the slanted portions 22a of the main pipes 22. The storage box 11 and the fuel tank 12 are covered with a rider's seat 13 mounted upwardly thereon. The storage box 11, the fuel tank 12, and a region beneath the rider's seat 12 are covered with a vehicle body cover 10.

In the front vehicle body portion 1A, a handle 14 is pivotally supported on the head pipe 20, and a front fork 15 extends downwardly from the handle 14 and has a lower end on which a front wheel 16 is rotatably supported.

FIG. 2 illustrates a right-hand side of a rear portion of the motorcycle 1 with the vehicle body cover 10 removed therefrom. As illustrated in FIG. 2, brackets 24 project nearly from the lower ends of the slanted portions 22a of the main pipes 22. The power unit 3 is swingably coupled to and supported on the brackets 24 by link members 25.

The power unit 3 has a front portion as a single-cylinder, four-stroke cycle, air-cooled internal combustion engine (hereinafter referred to simply as "internal combustion engine") 30. The power unit 3 includes a power unit case 50 having a front portion as a crankcase 50a in which a crankshaft 51 extending transversely across the vehicle is rotatably supported. The power unit 3 is kept at such a posture that a cylinder axis C is inclined largely forwardly and nearly horizontally. A hanger arm 52 projects forwardly from a lower end of the power unit case 50 and has an end vertically swingably coupled to the link members 25 attached to the brackets 24 of the main pipes 22.

The power unit 3 includes a cylinder block 31, a cylinder head 32, and a cylinder head cover 33 that are stacked successively one on another and fastened together. The cylinder block 31, the cylinder head 32, and the cylinder head cover 33 jointly make up the internal combustion engine 30 in a manner to be inclined largely forwardly and nearly horizontally in the front portion of the power unit case 50 that serves as the crankcase 50a. The power unit 3 also includes a power transmitting case 55 extending integrally rearwardly on a left side from the crankcase 50a and housing a belt-type continuously variable transmission, etc. A rear axle 56 as the output shaft of the power unit 3 is disposed on a rear portion of the power transmitting case 55. A rear wheel 17 is mounted on the rear axle 56.

The power unit 3 is a so-called swing unit, and a rear cushion, not illustrated, is interposed between the power transmitting case 55 in a rear potion of the power unit 3 and rear portions of the main pipes 22.

As illustrated in FIG. 2, in an upper portion of the power unit 3, an inlet pipe 6 extends from an upper portion of the cylinder head 32, which is inclined largely forwardly, of the internal combustion engine 30 and is bent rearwardly. The inlet pipe 6 is connected to a throttle body 7 positioned above the cylinder block 31. An air cleaner device 86 that is connected to the throttle body 7 by a connecting tube 85 is disposed above the power transmitting case 55.

An exhaust pipe 38 extends downwardly from a lower portion of the cylinder head 32, is bent rearwardly, is deflected to a right side, extends rearwardly, and is connected to a muffler 39 on a right side of the rear wheel 16.

FIG. 3 is a sectional side elevational view of the power unit 3, extracted from FIG. 2, that is oriented in substantially the same way as with FIG. 2.

The cross-section of the lest halves of the cylinder block 31, the cylinder head 32, and the cylinder head cover 33 of the internal combustion engine 30 of the power unit 3 are illustrated. The power unit case 50 includes a left case half 50L having a mating surface 50b, to be mated with a right case half, not illustrated, illustrated so as to face the viewer of FIG. 3.

The power unit case 50 is made up of the left case half 50L and the right case half, not illustrated, that are combined together, but can be split from each other. The right case half serves as a right half of the crankcase 50a. The left case half 50L includes a front portion serving as a left half of the crankcase 50a, and extends rearwardly as the power transmitting case 55 that houses therein a transmission assembly including the elongate belt-type continuously variable transmission, not illustrated, extending rearwardly between the crankshaft 51 and the rear axle 56 for the rear wheel 17 and a speed reducer gear mechanism 57, etc.

The speed reducer gear mechanism 57 is housed in a right-hand open face 55R of a rear portion of the power transmitting case 55, and is covered with a speed reducer case, not illustrated. The speed reducer gear mechanism 57 has an output shaft serving as the rear axle 56 for the rear wheel 17.

Rotational power from the crankshaft 51 in the crankcase 50a of the internal combustion engine 30 is transmitted to the rear wheel 17 through the belt-type continuously variable transmission and the speed reducer gear mechanism 57 in the power transmitting case 55.

The cylinder block 31 has a cylinder bore 31a defined therein. A piston 34 that is reciprocally movable in the cylinder bore 31a is coupled to a crankpin 51a of the crankshaft 51 in the crankcase 50a by a connecting rod 35.

A combustion chamber 36 is defined between a top surface 34a of the piston 34 that is slidably fitted in the cylinder bore 31a in the cylinder block 31 and a combustion chamber ceiling surface 32a of the cylinder head 32 faced by the top surface 34a.

According to the present embodiment, the internal combustion engine 30 employs a single overhead camshaft (SOHC) two-valve system including a valve operating mechanism 9 disposed in the cylinder head 32.

The valve operating mechanism 9 is covered with the cylinder head cover 33 superposed on the cylinder head 32.

For transmitting power to the valve operating mechanism 9 in the cylinder head cover 33, an endless cam chain, not illustrated, is disposed in a cam chain compartment, not illustrated, defined in one side of the crankcase 50a, the cylinder block 31, and the cylinder head 32 along a direction of the crankshaft 51 and is trained around a camshaft 91 and the crankshaft 51. The endless cam chain causes the camshaft 91 to rotate at a speed that is one-half of the crankshaft 51 in synchronism therewith.

A spark ignition plug, not illustrated, is inserted in the cylinder head 32 into the combustion chamber 36 from the side of the cylinder head 32 opposite to the cam chain compartment, which is the other side of the crankshaft 51.

As illustrated in FIG. 3 and FIG. 4, which is an enlarged view of a major section of FIG. 3, the cylinder head 32 where the cylinder axis C is inclined largely forwardly and nearly horizontally has an intake valve opening 40 and an exhaust valve opening 41 that are open in the combustion chamber ceiling surface 32a. The cylinder head 32 also has an intake port 42 and an exhaust port 43 defined therein that extend respectively from the intake valve opening 40 and the exhaust valve opening 41 while being curved in directions separated vertically away from each other.

The intake port 42 has an upstream end that is open upwardly of the cylinder head 32 and connected to the inlet pipe 6, jointly defining the intake passageway 80 continuously. The throttle body 7 is connected to an upstream side of the inlet pipe 6.

The exhaust port 43 has a downstream end that is open downwardly of the cylinder head 32 and coupled to the exhaust pipe 38 (see FIG. 2).

The intake port 42 in the cylinder head 32 is defined by a curved outer wall 42a in which a tubular intake valve guide 44 is integrally fitted. An intake valve 46 that is slidably supported in the intake valve guide 44 opens and closes the intake valve opening 40 through which the intake port 42 faces the combustion chamber 36.

The exhaust port 43 in the cylinder head 32 is defined by a curved outer wall 43a in which a tubular exhaust valve guide 45 is integrally fitted. An exhaust valve 47 that is slidably supported in the exhaust valve guide 45 opens and closes the exhaust valve opening 41 through which the exhaust port 43 faces the combustion chamber 36.

The intake valve 46 and the exhaust valve 47 have respective heads 46a and 47a normally biased to move upwardly by valve springs 48 for closing the intake valve opening 40 and the exhaust valve opening 41, respectively, that face the combustion chamber 36. As illustrated in FIG. 3, when an intake rocker arm 94 and an exhaust rocker arm 95 that are swingably held against an intake cam 92 and an exhaust cam 93, respectively, of the camshaft 91 depress respective stem ends 46b and 47b of the intake valve 46 and the exhaust valve 47, the intake valve 46 and the exhaust valve 47 are opened at predetermined timings, bringing the intake port 42 and the combustion chamber 36 into fluid communication with each other and also bringing the exhaust port 43 and the combustion chamber 36 into fluid communication with each other, thereby to introduce an air-fuel mixture into the combustion chamber 36 and discharge an exhaust gas from the combustion chamber 36 at predetermined timings.

The internal combustion engine 30 arranged above incorporates an intake structure for producing a tumbling flow T of a fuel-air mixture, i.e., imparting vertical rotation to a fuel-air mixture, in the combustion chamber 36 in order to achieve more preferable combustion in the combustion chamber 36.

Specifically, the continuous intake passageway 80 is defined by connecting the inlet pipe 6 to the upstream end of the intake port 42 of the internal combustion engine 30 with an insulator 61 interposed therebetween. The throttle body 7 is connected to the upstream side of the inlet pipe 6.

The throttle body 7 has the intake channel 70 defined therein that is contiguous to the intake passageway 80 leading to the combustion chamber 36 in the internal combustion engine 30. The throttle body 7 has an upstream side connected to the air cleaner device 86 (see FIG. 2) through the connecting tube 85.

The throttle body 7 includes a throttle valve 71 rotatably supported therein by a throttle valve shaft 71a oriented substantially horizontally perpendicularly to a flow direction F in the intake channel 70. The throttle valve 71 controls the passageway area of the intake channel 70 to vary for opening and closing the intake channel 70.

The throttle body 7 also includes a tumble valve 72 disposed downstream of the throttle valve 71 with respect to the flow direction F in the intake channel 70 and rotatably supported in the throttle body 7 by a tumble valve shaft 72a extending parallel to the throttle valve shaft 71a and oriented substantially horizontally perpendicularly to the flow direction F in the intake channel 70.

The throttle valve 71 that is disposed in an upstream region of the intake channel 70 in the throttle body 7 is of the butterfly type and has the throttle valve shaft 71a and a disk-shaped throttle valve plate 71b fastened to the throttle valve shaft 71a by bolts for rotation therewith.

The throttle valve 71 is rotatable counterclockwise in FIGS. 3 and 4 in a valve opening direction and is normally biased by a return spring, not illustrated, to rotate clockwise in a valve closing direction into a fully closed position in which the throttle valve plate 71b is to be held against an inner surface 70a of the intake channel 70.

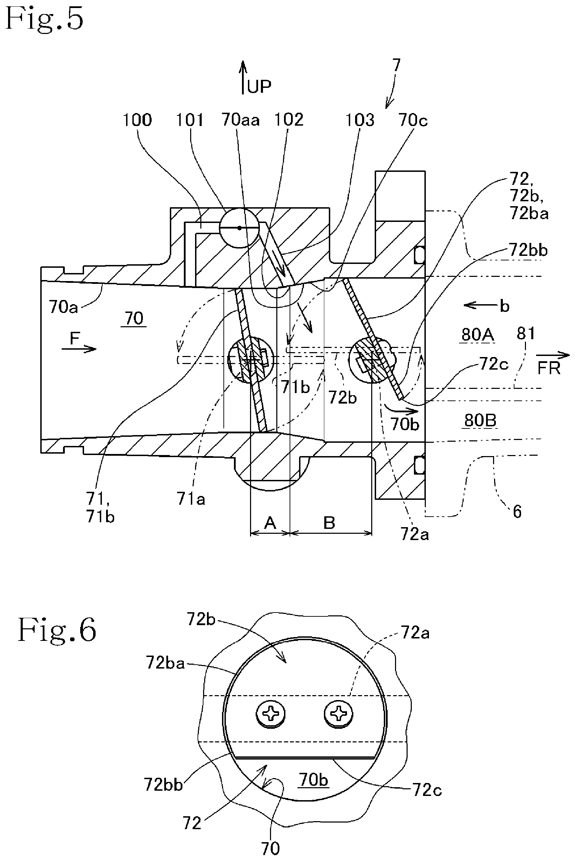

As illustrated in FIG. 5, the tumble valve 72 that is disposed in the intake channel 70 downstream of the throttle valve 71 with respect to the flow direction F in the intake channel 70 is of the butterfly type and has the tumble valve shaft 72a and a tumble valve plate 72b fastened to the tumble valve shaft 72a by bolts for rotation therewith. The tumble valve plate 72b includes a semicircular upper plate 72ba extending upwardly and a lower plate 72bb extending downwardly. The lower plate 72bb has a recess 72c defined therein.

The tumble valve 72 is rotatable counterclockwise in FIGS. 3 and 4 in a valve opening direction and is normally biased by a return spring, not illustrated, to rotate clockwise in a valve closing direction into a tumble valve closed position in which the upper plate 72ba of the tumble valve plate 72b is to be held against the inner surface 70a of the intake channel 70.

In the tumble valve closed position, the recess 72c in the lower plate 72bb of the tumble valve plate 72b defines an opening 70b (see FIG. 4) upon tumble valve closure in the intake channel 70.

The diameter of the intake channel 70 at a position where the tumble valve 72 is disposed is larger than the diameter of the intake channel 70 at a position where the throttle valve 71 is disposed, with a sloping inner surface 70c interposed therebetween, for making an intake air flow smooth and facilitating the removal of a mold at the time the throttle body 7 is cast.

According to the present embodiment, the intake passageway 80 is divided into upper and lower regions by the partition plate 81 continuously from the inlet pipe 6 to the intake port 42, i.e., separated into the lower auxiliary passageway 80B serving as a tumbling flow channel and the upper main passageway 80A exclusive of the lower auxiliary passageway 80B.

The partition plate 81 is made up of an inlet-pipe-side partition plate 81A, an insulator-side partition plate 81B, and an intake-port-side partition plate 81C that are positioned in succession.

The upper main passageway 80A and the lower auxiliary passageway 80B are defined as substantially semicircular cross-sectional shapes, respectively, by dividing the intake passageway 80 downstream of the tumble valve 72 into upper and lower regions with the partition plate 81 that extends longitudinally in the inlet pipe 6 and the intake port 42.

Therefore, the lower auxiliary passageway 80B in the intake passageway 80 in the inlet pipe 6 that is connected to a downstream side of the intake channel 70 in the throttle body 7 has an inlet opening 80Ba positioned downstream of the recess 72c in the tumble valve 72, i.e., downstream of the opening 70b upon tumble valve closure in the intake channel 70, when the tumble valve 72 is in a closed position indicated by the solid lines. The upper main passageway 80A has an inlet opening 80Aa positioned downstream of the upper plate 72ba of the tumble valve plate 72b in the intake channel 70.

A fuel injection valve 87 is mounted on the inlet pipe 6 so as to extend into the upper main passageway 80A from above and outside and disposed so as to inject fuel toward the intake valve opening 40.

As illustrated in FIG. 4, the partition plate 81 has a downstream end 81b positioned in the intake port 42 in the cylinder head 32 and bent toward the cylinder block 31 integrally with the cylinder head 32. The lower auxiliary passageway 80B has a terminal end 80Bb oriented toward the combustion chamber ceiling surface 32a of the cylinder head 32.

Consequently, inasmuch as intake air flowing through the lower auxiliary passageway 80B can pass above the head 46a of the intake valve 46 and flow into the cylinder bore 31a, as indicated by the small arrows in FIG. 4, the tumbling flow T can easily be produced in the combustion chamber 36. In other words, the lower auxiliary passageway 80B serves as the tumbling flow channel for producing the tumbling flow T.

The tumble valve 72 essentially opens and closes the upper main passageway 80A by controlling, with the upper plate 72ba of the tumble valve plate 72b, the influx of an intake flow into the upper main passageway 80A, of the pair of the upper main passageway 80A and the lower auxiliary passageway 80B that divide the intake flow in the intake passageway 80 downstream of the tumble valve plate 72b. The tumble valve plate 72b has the recess 72c defined in the lower plate 72bb thereof.

Specifically, in the tumble valve closed position, the upper plate 72ba of the tumble valve plate 72b is positioned in covering relation to the inlet opening 80Aa of the upper main passageway 80A to limit the influx of the intake flow. Since the intake flow is guided from the recess 72c in the lower plate 72bb into the lower auxiliary passageway 80B by the tumble valve plate 72b, the upper main passageway 80A is essentially closed.

As the tumble valve 72 rotates in an opening direction, the influx of the intake flows into the upper main passageway 80A increases. When the tumble valve 72 is in a fully open position, as indicated by the two-dot-and-dash lines in FIGS. 4 and 5, the throttle valve plate 71b and the bumble valve plate 72b are positioned parallel to the flow direction F in the intake channel 70, allowing the intake flow in the intake channel 70 to flow at a sufficient rate into both the upper main passageway 80A and the lower auxiliary passageway 80B and toward the combustion chamber 36, without being impeded by the throttle valve 71 and the tumble valve 72.

The throttle valve 71 is opened or closed when it is turned through a throttle wire, not illustrated, by the rider operating an accelerator grip 75 (see FIG. 1).

When the accelerator grip 75 is not operated, the throttle valve 71 is closed by the return spring. An idling air passageway 100 for supplying intake air at a rate required for idling operation and minimum-load operation of the internal combustion engine 30 is defined in the throttle body 7 on an upper side of the intake channel 70 in a manner to provide fluid communication between a region upstream of the throttle valve 71 and a region downstream of the throttle valve 71. The idling air passageway 100 has a downstream outlet 102 defined in the tapered inner surface 70c between the throttle valve 71 and the tumble valve 72 so as to be open at an upper inner surface 70aa of the intake channel 70.

An IACV 101 is disposed in the idling air passageway 100 for controlling a rate at which to supply idling air depending on the operation state of the internal combustion engine 30.

Consequently, when the throttle valve 71 is in the closed position and the tumble valve 72 is in the predetermined closed position downstream of the throttle valve 71, idling air passes through the idling air passageway 100 and flows out of the downstream outlet 102 that is open at the upper inner surface 70aa of the intake channel 70. The idling air that flows out into the intake channel 70 is restrained from flowing into the upper main passageway 80A in the intake passageway 80 by the tumble valve plate 72b of the tumble valve 72, but is directed toward and through the opening 70b upon tumble valve closure defined by the recess 72c in the tumble valve plate 72b, and is guided into the lower auxiliary passageway 80B and flows toward the combustion chamber 36.

Inasmuch as the idling air passageway 100 is defined in the upper side of the intake channel 70, fuel is less likely to accumulate as a gas in the idling air passageway 100. The idling air passageway 100 is thus disposed above the intake channel 70.

At the time the internal combustion engine 30 is operating in an idling mode or in a low-load mode, the intake air flows into the combustion chamber 36 at an increased speed, thereby intensifying the tumbling flow T (vertical vortex flow) of intake air produced in the combustion chamber 36.

As the intake passageway 80 disposed downstream of the tumble valve 72 is divided into the upper and lower regions, the intake flow is controlled by the tumble valve 72 to flow through only the lower auxiliary passageway 80B toward the combustion chamber 36. Therefore, the tumbling flow T of intake air produced in the combustion chamber 36 is further intensified.

When the intake valve 46 is closed in the combustion chamber 36, the intake air that has passed through the lower auxiliary passageway 80B slightly rises toward the upper main passageway 80A above the head 46a of the intake valve 46, so that the mixture of intake air and fuel is stirred and uniformized in the intake port 42.

The throttle valve 71 and the tumble valve 72 are interlinked by an interlinking mechanism, not illustrated, such that the tumble valve 72 is opened in a predetermined relationship depending on the opening of the throttle valve 71. When the throttle valve 71 is fully opened under a high load and the tumble valve 72 is in the fully open position, as indicated by the two-dot-and-dash lines in FIG. 4, the throttle valve plate 71b and the tumble valve plate 72b are positioned parallel to the flow direction F in the intake channel 70, allowing the intake flow in the intake channel 70 to flow at a sufficient rate into both the upper main passageway 80A and the lower auxiliary passageway 80B and toward the combustion chamber 36, without being impeded by the throttle valve 71 and the tumble valve 72.

As illustrated in FIG. 5, the idling air passageway 100 includes a downstream passageway 103 defined in the vicinity of the downstream outlet 102 parallel to the tumble valve plate 72b of the tumble valve 72 when it is closed as viewed along a horizontal direction perpendicular to the flow direction in the intake channel 70 or as viewed in a sectional side elevation of the intake channel 70. Therefore, idling air flowing out of the idling air passageway 100 is more effectively restrained from flowing into the upper main passageway 80A by the tumble valve plate 72b and is guided toward the lower plate 72bb of the tumble valve 72 to easily flow through the recess 72c defined in the lower plate 72bb into the lower auxiliary passageway 80B.

According to the present embodiment, in particular, because the tapered inner surface 70c that is progressively larger in diameter downstream is provided in the intake channel 70 downstream of the throttle valve 71, and the downstream outlet 102 of the idling air passageway 100 is defined in the tapered inner surface 70c, the downstream passageway 103 of the idling air passageway 100 can easily be formed parallel to the tumble valve plate 72b of the tumble valve 72 when it is closed as viewed along the horizontal direction perpendicular to the flow direction F in the intake channel 70. Furthermore, as the downstream outlet 102 of the idling air passageway 100 is defined in the tapered inner surface 70c, the downstream outlet 102 of the idling air passageway 100 is oriented toward the opening 70b upon tumble valve closure, making it easy for the intake flow in the idling air passageway 100 to flow into the lower auxiliary passageway 80B.

Moreover, as illustrated in FIG. 5, the downstream outlet 102 of the idling air passageway 100 is disposed in a position that is closer to the throttle valve shaft 71a of the throttle valve 71 than to the tumble valve shaft 72a of the tumble valve 72. Accordingly, the distance between the downstream outlet 102 of the idling air passageway 100 and the recess 72c in the lower plate 72bb of the tumble valve 72 is increased to make it easy for the idling air flowing out of the idling air passageway 100 to flow from the recess 72c in the lower plate 72bb of the tumble valve plate 72b into the lower auxiliary passageway 80B.

The intake structure for internal combustion engines according to the present invention as applied to the power unit 3 as the swing unit has been described above as Embodiment 1. The intake structure for internal combustion engines according to the present invention is not limited to the power unit 3 whose cylinder axis C is inclined forwardly and nearly horizontally, but is also applicable to power units of other types.

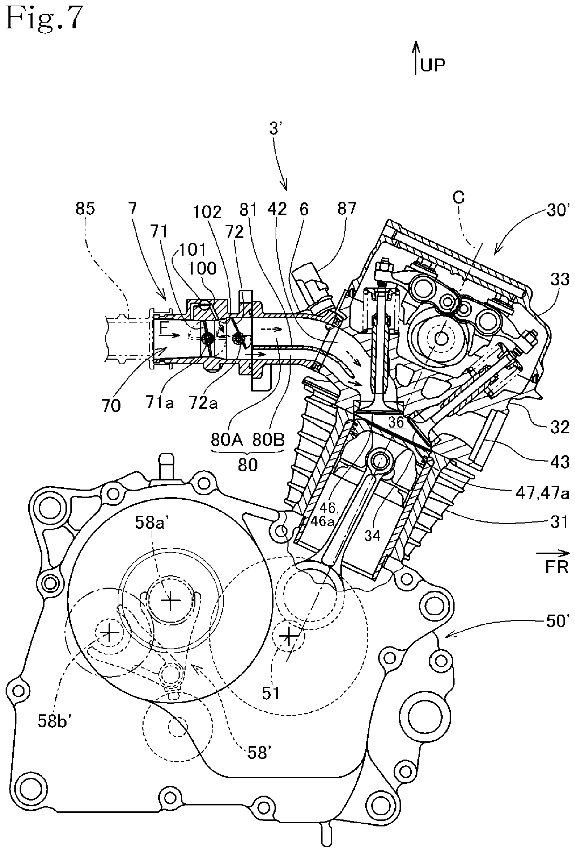

For example, the intake structure for internal combustion engines according to the present invention is applicable with exactly similar effects to a vehicle-mounted power unit 3' incorporating an internal combustion engine with an erected cylinder axis C as illustrated in FIG. 7, i.e., a so-called vertical-type internal combustion engine 30'.

The intake structure thus applied will hereinafter be described below as Embodiment 2.

The power unit 3' according to Embodiment 2 illustrated in FIG. 7 is fixedly mounted on the vehicle body frame of a motorcycle at a posture illustrated in FIG. 7. The power unit 3' includes a power unit case 50', and the internal combustion engine 30' includes a cylinder block 31, a cylinder head 32, and a cylinder head cover 33 that are successively stacked one on another, slightly inclined forwardly, and fastened to a front portion of the power unit case 50'. The internal combustion engine 30' has a crankshaft 51 extending transversely across the vehicle.

A gear transmission apparatus 58' having a main shaft 58a' and a countershaft 58b' that extend parallel to the crankshaft 51 is disposed in a rear portion of the power unit case 50'. The countershaft 58b' serves as an output shaft.

An exhaust port 43 is open forwardly of the cylinder head 32 and connected to an exhaust pipe 38, not illustrated. An intake port 42 is open rearwardly of the cylinder head 32 and connected successively to an inlet pipe 6, a throttle body 7, and a connecting tube 85 rearwardly, i.e., upstream with respect to a flow of intake air. The connecting tube 85 is connected to an air cleaner device, not illustrated.

As with Embodiment 1, a partition plate 81 is disposed in the inlet pipe 6 and the intake port 42, and a throttle valve 71 and a tumble valve 72 are similarly disposed in a throttle body 7. A similar idling air passageway 100 is defined on an upper side of an intake channel 70 in a manner to provide fluid communication between a region upstream of the throttle valve 71 and a region downstream of the throttle valve 71. The idling air passageway 100 has a downstream outlet 102 defined in an upper inner surface 70aa of the intake channel 70 between the throttle valve 71 and the tumble valve 72, as illustrated in FIG. 5.

According to Embodiment 2, therefore, the intake structure for internal combustion engines according to the present invention which is similar to Embodiment 1 is provided as illustrated in FIG. 7, and offers similar operation and effects.

### [Reference Signs List]

1···Motorcycle, 2···Vehicle body frame, 3, 3' ···Power unit, 6···Inlet pipe, 7···Throttle body, 14···Handle, 30, 30'···Internal combustion engine, 31···Cylinder block, 31a···Cylinder bore, 32···Cylinder head, 32a···Combustion chamber ceiling surface, 34···Piston, 34a···Top surface, 35···Connecting rod, 36···Combustion chamber, 40···Intake valve opening, 41···Exhaust valve opening, 42···Intake port, 42a···Curved outer wall, 43···Exhaust port, 46···Intake valve, 46a···Head, 47···Exhaust valve, 48···Valve spring, 50, 50'···Power unit case, 50L···Left case half, 50a···Crankcase, 51···Crankshaft, 51a···Crankpin, 55···Power transmitting case, 58'···-Gear transmission apparatus, 58a'···-Main shaft, 58b'···-Countershaft, 70···Intake channel, 70a···Inner surface, 70aa···Upper inner surface, 70b···Opening upon tumble valve closure, 70c···Tapered inner surface, 71···Throttle valve, 71a···Throttle valve shaft, 71b···Throttle valve plate, 72···Tumble valve, 72a···Tumble valve shaft, 72b···Tumble valve plate, 72ba···Upper plate, 72bb···Lower plate, 72c···Recess, 80···Intake passageway, 80A···Upper main passageway, 80Aa···Inlet opening, 80B···Lower auxiliary passageway, 80Ba···Inlet opening, 80Bb···Terminal end, 81···Partition plate, 81b···Downstream end, 100···Idling air passageway, 101···Idling air control valve, 102···Downstream outlet, 103···Downstream passageway, C···Cylinder axis, F···Flow direction (of the intake channel 70), T···Tumbling flow

## Claims

1. An intake structure for an internal combustion engine, in which:
the internal combustion engine (30, 30') having a combustion chamber (36) includes a cylinder block (31) and a cylinder head (32), the cylinder head (32) having an intake port (42) and an exhaust port (43) defined therein;
an inlet pipe (6) is connected to the intake port (42), defining a continuous intake passageway (80);
a throttle body (7) having an intake channel (70) continuing to the intake passageway (80) is connected to an upstream side of the inlet pipe (6) with respect to an intake flow therein;
the throttle body (7) is provided with a throttle valve (71) and a tumble valve (72) disposed downstream thereof with respect to a flow direction (F) of the intake flow in the intake channel (70); and
the intake passageway (80) is divided by a partition plate (81) downstream of the tumble valve (72) into an upper main passageway (80A) and a lower auxiliary passageway (80B) serving as a tumbling flow channel for producing a tumbling flow in the combustion chamber (36),
wherein an idling air passageway (100) is defined in an upper side of the intake channel (70) to provide fluid communication between a region upstream of the throttle valve (71) and a region downstream of the throttle valve (71), the idling air passageway (100) having a downstream outlet (102), the downstream outlet (102) being defined in an upper inner surface (70aa) of the intake channel (70) between the throttle valve (71) and the tumble valve (72), and
the tumble valve (72) has a tumble valve plate (72b) and a recess (72c) defined therein, the tumble valve (72) being arranged such that when the throttle valve (71) is fully closed, idling air flowing out of the idling air passageway (100) is restrained by the tumble valve plate (72b) from flowing into the upper main passageway (80A) and is guided from the recess (72c) to the lower auxiliary passageway (80B).

2. The intake structure for an internal combustion engines as claimed in claim 1, wherein the idling air passageway (100) has a downstream passageway (103) leading to the downstream outlet (102), the downstream passageway (103) being defined parallel to the tumble valve plate (72b) of the tumble valve (72) when the tumble valve (72) is closed as viewed in a horizontal direction perpendicular to the flow direction (F) in the intake channel (70).

3. The intake structure for an internal combustion engine as claimed in claim 2, wherein a tapered inner surface (70c) being progressively larger in diameter toward a downstream side is provided in the intake channel (70) downstream of the throttle valve (71), the downstream outlet (102) of the idling air passageway (100) being defined in the tapered inner surface (70c).

4. The intake structure for an internal combustion engine as claimed in any one of claims 1 through 3, wherein the downstream outlet (102) of the idling air passageway (100) is disposed in a position closer to a throttle valve shaft (71a) of the throttle valve (71) than to a tumble valve shaft (72a) of the tumble valve (72) .

## Patentansprüche

1. Einlassstruktur für einen Verbrennungsmotor, wobei:
der Verbrennungsmotor (30, 30'), welcher eine Brennkammer (36) aufweist, einen Zylinderblock (31) und einen Zylinderkopf (32) umfasst, wobei der Zylinderkopf (32) eine Einlassöffnung (42) und eine Auslassöffnung (43) aufweist, welche darin definiert sind;
ein Einlassrohr (6) mit der Einlassöffnung (42) verbunden ist, wobei ein kontinuierlicher Einlassdurchgang (80) definiert ist;
ein Drosselkörper (7), welcher einen Einlasskanal (70) aufweist, welcher zu dem Einlassdurchgang (80) fortgesetzt ist, mit einer stromaufwärtigen Seite des Einlassrohrs (6) in Bezug auf eine Einlassströmung darin verbunden ist;
der Drosselkörper (7) mit einem Drosselventil (71) und einem Tumble-Ventil (72) bereitgestellt ist, welches stromabwärts davon in Bezug auf eine Strömungsrichtung (F) der Einlassströmung in dem Einlasskanal (70) angeordnet ist; und
der Einlassdurchgang (80) durch eine Unterteilungsplatte (81) stromabwärts des Tumble-Ventils (72) in einen oberen Hauptdurchgang (80A) und einen unteren Hilfsdurchgang (80B) unterteilt ist, als ein Tumble-Strömungskanal zum Erzeugen einer Tumble-Strömung in der Brennkammer (36) dienend,
wobei ein Leerlauf-Luftdurchgang (100) in einer oberen Seite des Einlasskanals (70) definiert ist, um eine Fluid Kommunikation zwischen einem Bereich stromaufwärts des Drosselventils (71) und einem Bereich stromabwärts des Drosselventils (71) bereitzustellen, wobei der Leerlauf-Luftdurchgang (100) einen stromabwärtigen Auslass (102) aufweist, wobei der stromabwärtige Auslass (102) in einer oberen inneren Fläche (70aa) des Einlasskanals (70) zwischen dem Drosselventil (71) und dem Tumble-Ventil (72) definiert ist, und
das Tumble-Ventil (72) eine Tumble-Ventilplatte (72b) und eine Aussparung (72c) darin definiert aufweist, wobei das Tumble-Ventil (72) derart angeordnet ist, dass, wenn das Drosselventil (71) vollständig geschlossen ist, Leerlauf-Luft, welche aus dem Leerlauf-Luftdurchgang (100) herausströmt, durch die Tumble-Ventilplatte (72b) daran gehindert wird, in den oberen Hauptdurchgang (80A) zu strömen und von der Aussparung (72c) zu dem unteren Hilfsdurchgang (80B) geleitet wird.

2. Einlasskanalstruktur für Verbrennungsmotoren nach Anspruch 1, wobei der Leerlauf-Luftdurchgang (100) einen stromabwärtigen Durchgang (103) aufweist, welcher zu dem stromabwärtigen Auslass (102) führt, wobei der stromabwärtigen Durchgang (103) parallel zu der Tumble-Ventilplatte (72b) des Tumble-Ventils (72) definiert ist, wenn das Tumble-Ventil (72) geschlossen ist, betrachtet in einer horizontalen Richtung senkrecht zu der Strömungsrichtung (F) in dem Einlasskanal (70).

3. Einlasskanalstruktur für einen Verbrennungsmotor nach Anspruch 2, wobei eine verjüngte innere Fläche (70c), welche bezüglich eines Durchmessers progressiv größer in Richtung einer stromabwärtigen Seite ist, in dem Einlasskanal (70) stromabwärts des Drosselventils (71) bereitgestellt ist, wobei der stromabwärtige Auslass (102) des Leerlauf-Luftdurchgangs (100) in der verjüngten inneren Fläche (70c) definiert ist.

4. Einlasskanalstruktur für einen Verbrennungsmotor nach einem der Ansprüche 1 bis 3, wobei der stromabwärtige Auslass (102) des Leerlauf-Luftdurchgangs (100) in einer Position angeordnet ist, welche näher an einem Drosselventilschaft (71a) des Drosselventils (71) als an einem Tumble-Ventilschaft (72a) des Tumble-Ventils (72) ist.

## Revendications

1. Structure d'admission pour un moteur à combustion interne, dans laquelle :
le moteur à combustion interne (30, 30') présentant une chambre de combustion (36) comporte un bloc-cylindres (31) et une culasse (32), la culasse (32) présentant un orifice d'admission (42) et un orifice d'échappement (43) définis en son sein ;
un tuyau d'entrée (6) est raccordé à l'orifice d'admission (42), définissant un passage d'admission continu (80) ;
un corps d'étranglement (7) présentant un canal d'admission (70) continuant dans le passage d'admission (80) est raccordé à un côté amont du tuyau d'entrée (6) par rapport à un flux d'admission en son sein ;
le corps d'étranglement (7) est doté d'une soupape d'étranglement (71) et d'une soupape de culbutage (72) disposées en amont de celui-ci par rapport à une direction de flux (F) du flux d'admission dans le canal d'admission (70) ; et
le passage d'admission (80) est divisé par une plaque de séparation (81) en aval de la soupape de culbutage (72) en un passage principal supérieur (80A) et un passage auxiliaire inférieur (80B) servant de canal de flux de culbutage pour produire un flux de culbutage dans la chambre de combustion (36),
dans laquelle un passage d'air de ralenti (100) est défini dans un côté supérieur du canal d'admission (70) pour fournir une communication fluidique entre une région en amont de la soupape d'étranglement (71) et une région en aval de la soupape d'étranglement (71), le passage d'air de ralenti (100) présentant une sortie aval (102), la sortie aval (102) étant définie dans une surface interne supérieure (70aa) du canal d'admission (70) entre la soupape d'étranglement (71) et la soupape de culbutage (72), et
la soupape de culbutage (72) présente une plaque de soupape de culbutage (72b) et un évidement (72c) définis en son sein, la soupape de culbutage (72) étant agencée de sorte que lorsque la soupape d'étranglement (71) est complètement fermée, l'écoulement d'un air de ralenti hors du passage d'air de ralenti (100) est restreint par la plaque de soupape de culbutage (72b) dans le passage principal supérieur (80A) et l'air de ralenti est guidé de l'évidement (72c) au passage auxiliaire inférieur (80B).

2. Structure d'admission pour un moteur à combustion interne selon la revendication 1, dans laquelle le passage d'air de ralenti (100) présente un passage aval (103) menant à la sortie aval (102), le passage aval (103) étant défini parallèlement à la plaque de soupape de culbutage (72b) de la soupape de culbutage (72) lorsque la soupape de culbutage (72) est fermée, comme cela est vu dans une direction horizontale perpendiculaire à la direction de flux (F) dans le canal d'admission (70).

3. Structure d'admission pour un moteur à combustion interne selon la revendication 2, dans laquelle une surface interne conique (70c) s'élargissant progressivement en diamètre en direction d'un côté aval est fournie dans le canal d'admission (70) en aval de la soupape d'étranglement (71), la sortie aval (102) du passage d'air de ralenti (100) étant définie dans la surface interne conique (70c).

4. Structure d'admission pour un moteur à combustion interne selon l'une quelconque des revendications 1 à 3, dans laquelle la sortie aval (102) du passage d'air de ralenti (100) est disposée dans une position plus proche d'un arbre de soupape d'étranglement (71a) de la soupape d'étranglement (71) que d'un arbre de soupape de culbutage (72a) de la soupape de culbutage (72).
